# EUROPEAN PATENT APPLICATION

(11) **EP 1 443 442 A2**
(43) Date of publication of application: **04.08.2004**
(21) Application number: 02802374.5
(22) Date of filing: 29.10.2002
(51) Int. Cl.: G06F 17/60

(54) **POINT SALES SERVER AND POINT SALES METHOD**

(30) Priority: 02.11.2001 JP 2001337950
(71) Applicant: Sony Corporation, Tokyo 141-0001 (JP)
(72) Inventor: HAGIWARA, Kotaro, SONY FINANCE INTERNATIONAL, INC., Minato-ku, Tokyo 107-0062 (JP)
(74) Representative: Horner, David Richard
(86) International application number: PCT/JP2002/011201
(87) International publication number: WO 2003/038703

(57) **Abstract**

A server (5) references point management data (15) to extract a point balance (111), a point expiration date (113) corresponding to a card number (101) sent from a computer (7), for sending to the computer (7) along with goods data (25). The server (5) references the goods data (25) to extract exchange points (161) corresponding to goods ID (163) sent from the computer (7), and send them to calculate an after-goods exchange point balance ((point number (111)) - (exchange points (161))). If (after-goods exchange point balance) < 0, then deficit points are displayed to the computer (7) to encourage the purchase points . The server (5) sets a unit sale price of points based on member data (13), point sale data (23) and the like to prepare a point sale price list and send them to the computer (7). The server (5) updates point purchase data (19), point history data (17), the point management data (15) according to the number of purchased points sent from the computer (7).

## Description

### Technical Field

The present invention pertains to a point selling server, a point selling method in electronic commerce. Particularly, the invention pertains to a point selling server, a point selling method by which points are purchased, sold and the like, in commercial transactions, electronic commerce over networks or the like using cards or the like, such as credit cards, point cards, to which points are rewarded according to an amount spent or the like.

### Background Art

Recently, commercial transactions, electronic commerce over networks or the like are being performed briskly, utilizing cards or the like, such as credit cards, point cards, to which points are rewarded according to an amount spent or the like.

Issuers of credit cards, point cards or the like can promote use of their cards, their sales or the like by redeeming prescribed points for goods and services.

As to the use of points, as disclosed in, for example, Japanese Unexamined Patent Publication No. 2001-148076, a technique is known in which each point is managed every time it is offered, to make it expired when its expiration date passes.

Further, as disclosed in, for example, Japanese Unexamined Patent Publication No. 2001-184403, a technique is known in which a point card user can check his or her point balance over a Web page so as to be able to use his or her points for goods purchase.

Still further, as disclosed in, for example, Japanese Unexamined Patent Publication No. 2001-209862, a technique is known in which points offered by a plurality of companies, shops can be used in combination so as to be able to exchange these combined points for goods.

However, since expiration dates are usually set for points, there exist problems in the above-mentioned conventional techniques that points become expired when their expiration dates pass, and also that points fell short of a prescribed number of points cannot be exchanged for goods and services or the like.

That is, since points fell short of a prescribed number of points cannot be used by exchange for goods and services, and also are made expired due to passage of their expiration dates, there exists a problem that a card user may not sometimes be able to enjoy the benefit of the points even having earned points.

The present invention has been made in view of these problems, and an object thereof is to provide a point selling server, a point selling system, a point selling method and the like which make it possible to reduce expired points resulting from being to fall short of a prescribed number of points and the passage of their expiration dates.

### Disclosure of the Invention

In order to achieve the above-mentioned object, a first invention is a point selling server characterized by including: holding means for holding information specifying a member and a point balance, as associated with each other; second holding means for managing goods identifying information for exchange based on a number of points, and a number of corresponding points, as associated with each other; means for referencing the holding means and the second holding means, and comparing a point balance of a member with a number of points corresponding to a piece of goods specified in an exchange request when receiving the exchange request for the goods from the member which includes the member specifying information; and means for proposing sale of a prescribed number of point when the point balance of the member is short of points corresponding to the goods specified in the exchange request.

In the first invention, the point selling server holds the information specifying a member (member specifying information) and the point balance, as associated with each other, as point management data, and holds the goods identifying information for exchange based on a number of points and the number of corresponding points, as associated with each other, as goods data. The point selling server references the point management data and the goods data when receiving the exchange request for the goods from the member which includes the member specifying information, and comparing the point balance of the member with a number of points corresponding to a piece of goods specified in the exchange request. When the point balance of the member is short of points corresponding to the goods specified in the exchange request, the point selling server proposes the sale of a prescribed number of points.

Throughout the present description and claims, "goods/merchandise" are used to include any goods/merchandise in its ordinary sense of the word, as well as any service in its ordinary sense of the word.

The member is a member of a company, a shop or the like providing a point service, and is offered the point service.

The point service means a service by which, for example, to offer points to the member according to usage (an amount spent or the like), to exchange a prescribed number of points for prescribed goods, prescribed services or the like.

Here, the point (s) should be construed in a broad sense such as reward offered according to the member performing a prescribed action, such as merchandise purchase, and thus should not be stuck to the name "point". The most common example of the prescribed action performed by the member is a commercial transaction involving pecuniary settlement, but, as will be described later, there may be some cases where point(s) is offered even for a member's action involving no pecuniary settlement. It is preferable that points be countable, such as "1 point", but not necessarily limited to natural numbers, but can be counted in terms of real number (in other words, in units including a decimal point, a fraction and the like). The unit of a point is also arbitrary, and thus, for example, exchangeable goods can be the unit of a point, such as "a point worth 0.5 pieces of a CD".

The point selling server is a server computer or the like belonging to a company, shop or the like providing the point service, such as a server belonging to a card company.

The company, the shop or the like providing the point service issues a card to the member, and, for example, offers points according to usage such as an amount spent using the card. The member, for example, exchanges the points for prescribed goods. As has already been mentioned, in many cases, periods of use are set for points, during which they can be exchanged for goods. Techniques of setting periods of use are arbitrary. As an example, a technique is available in which goods exchange deadline (the end of a period of use) is determined equally for all points offered within a prescribed period, and another technique is also available in which a fixed period of use is determined every time a point is offered. Further, different periods of use can be determined according to time or conditions applied when points are offered. Therefore, the same period of use is not applied to all point balances.

The card is, for example, a credit card, a point card, and is a card to which, for example, points are offered according to usage such as an amount spent.

Further, the card may be an IC card or the like having a function as a credit card, a point card or the like. In this case, the member can use the IC card as a credit card, a point card or the like.

The point balance is held, as mentioned above, on the point selling server as associated with the member specifying information, but the point balance, the member specifying information may also be held on a point card or the like the member carries around, as backups. Further, in an embodiment to be described later, the point balance, the member specifying information may be held only on the point card or the like.

The information specifying a member (member specifying information) is a code string including numerals, characters, symbols specifying a member and the like, and is, for example, a card number (a credit card number, a point card number or the like).

It should be noted that the company, the shop or the like providing the point service may issue a membership number or the like, instead of issuing the card, to the member, and this membership number or the like may also be used as the information specifying the member.

It should be noted that the "member" herein used indicates not only a member registered at the time of an operation such as a commercial transaction, but can be construed as a "member" according to the present invention, as long as the member has his or her member specifying information registered at the time of goods exchange.

The goods identifying information is information for identifying goods for which points are exchanged, and is, for example, a goods ID. The goods ID is a code string comprising numerals, characters, symbols and the like specifying goods, and is, for example, "S9001".

The number of points corresponding to goods means the number of points required in order to be exchanged for the goods.

The exchange request is information including the information specifying a member (member specifying information), the goods identifying information of goods for which the member desires to exchange points.

The member earns points according to usage, such as, for example, (1) a price of merchandise for purchase, (2) an amount spent using a credit card, (3) a period of use of merchandise, (4) a frequency of use of merchandise, (5) a distance traveled by transportation, (6) answering a questionnaire, (7) browsing an Internet information resource, or the like.
(1) The price of merchandise for purchase means an amount of money to be paid for merchandise for purchase, or the like, and points are offered to a purchaser according to this amount of money to be paid, for example.
(2) The amount spent using a credit card means an amount of money spent or the like by use of the credit card, and points are offered to a purchaser according to this amount of money spent, for example.
(3) The period of use of merchandise means a period during which the merchandise (including a service or the like, as mentioned earlier) is used, a period during which a shop is used, or the like, and points are offered to a user according to this period, for example.
(4) The frequency of use of merchandise means how many times the merchandise (including a service or the like, as mentioned earlier) is used, how many times a shop is used, or the like, and points are offered to a user according to this frequency, for example.
(5) The distance traveled by transportation means a distance traveled by transportation, such as an airplane, a railroad, a ship, and points are offered to a passenger according to the distance traveled by airplane, for example. The points may be called mileage or the like.
(6) The answering a questionnaire means answering a questionnaire for market research, or the like, and points are offered to a respondent to the questionnaire according to how the questionnaire is answered, for example.
(7) The browsing an Internet information resource means browsing a Web page linked to banner ads, accessing a particular website, or the like, and points are offered to the member according to the frequency at which a particular Web page is accessed, or the like, for example.

Further, in addition to the items listed in these items (1) through (7), points may, in some cases, be offered according to a payment method, a type of membership.

The payment method means a mode of payment or the like, and is, for example, by single payment, installment payment in credit card settlement.

The type of membership means a type of membership, a credit card or the like, and is, for example, "a gold member", "a gold card", "an ordinary member", "an ordinary card".

In the first invention, the point selling server can offer points by selling points to the member, and the member, when exchanging points for goods, even if the balance of points is short of exchange points for the goods, can purchase a prescribed number of points to exchange the points for the goods.

Therefore, expired points resulting from being to fall short of a prescribed number of points and the passage of their expiration date(s) can be reduced, and further, the exchanging rate of points can be improved.

Further, the point selling server may calculate a difference between the outstanding points of the member and the number of points corresponding to the goods, and may sell this calculated number of points in deficit. In this case, the member can exchange the points for the goods in exact quantities, whereby expiration of points can be prevented.

Further, the number of points to be sold by the point selling server may be an arbitrary number of points. In this case, the member can purchase an arbitrary number of points to exchange the points for desired goods, regardless of the point balance.

Further, the point selling server may hold further an expiration date of point(s) along with the information specifying a member (member specifying information), the point balance, as associated with one another, as the point management data, and may accept the exchange request for the goods, the sale of points and the like only within a prescribed period from the expiration date of the point(s).

In this case, for example, by starting the exchange request for goods, the sale of points and the like one month before the expiration date, the percentage of purchased points in the point balance can be adjusted, for example.

It should be noted that it may be arranged such that the point selling server is connected to at least one terminal device belonging to the member via a network or the like, to receive the information specifying the member (member specifying information), the goods identifying information and the like from the terminal device via the network, and send information about the points, the goods and the like to the terminal device via the network. In this case, the terminal device is a personal computer, a portable information terminal, a cellular phone or the like. The network is a network such as the Internet, whether wired or wireless.

It should be noted that it may be arranged such that the point selling server holds a point sale condition, a unit sale price and the like as corresponded to one another, as point sale data, and determines the unit sale price of points based on the point sale condition.

In this case, the point selling server can add a prescribed profit to the unit sale price of points, whereby the company, the shop or the like providing the point service can make prof its by operating the point selling server and selling points.

It should be noted that it may be arranged such that the information specifying a member, attribute information about the member and the like may be held as corresponded to one another, as member data, whereby to determine the unit sale price based on the point sale data, using this attribute information as the point sale condition.

Here, the attribute information about a member means information about the card or the like issued to the member, personal information about the member and the like, such as a card number (a credit card number, a point card number or the like), a membership number, a card type, a membership type, a name, an address, a payment mode.

In this case, since the point selling server can determine the unit sale price of points based on the attribute information about the member such as the membership type, the card type, the company, the shop or the like providing the point service can expect more profits by changing the membership type, the card type, promoting use, and the like.

A second invention is apoint selling method characterized by including the steps of: managing information specifying a member and a point balance, as associated with each other; managing goods identifying information for exchange based on a number of points, and a number of corresponding points, as associated with each other; comparing a point balance of a member with a number of points corresponding to a piece of goods specified in an exchange request when receiving the exchange request for the goods from the member through indication of the member specifying information; and proposing sale of a prescribed number of points when the point balance of the member is short of the number of points corresponding to the goods specified in the exchange request.

Preferably, the points are points offered according to at least one of (1) a price of merchandise for purchase, or (2) an amount spent using a credit card, or (3) a period of use of merchandise, or (4) a frequency of use of merchandise, or (5) a distance traveled by transportation, or (6) answering a questionnaire, or (7) browsing an Internet information resource.

Preferably, the point selling method further includes the step of calculating a difference between the point balance of the member and the number of points corresponding to the goods, and the prescribed number of points is the calculated number of points in deficit.

Preferably, the point selling method further includes the steps of: managing further an expiration date of point(s) along with the member specifying information and the point balance; and accepting the exchange request for the goods made by the member only within a prescribed period from the point expiration date set for the member.

A third invention is a program making a computer to function as the point selling server according to the first invention.

A fourth invention is a recording medium having recorded thereon a program making a computer to function as the point selling server according to the first invention.

The above-mentioned program can be distributed via the network, and the recording medium can also be distributed.

### Brief Description of Drawings

FIG. 1 is a schematic diagram of a configuration of a point selling system 1.
FIG. 2 is a diagram showing member data 13.
FIG. 3 is a diagram showing point management data 15.
FIG. 4 is a diagram showing point history data 17.
FIG. 5 is a diagram showing point purchase data 19.
FIG. 6 is a diagram showing point offer data 21.
FIG. 7 is a diagram showing point sale data 23.
FIG. 8 is a diagram showing goods data 25.
FIG. 9 is a flowchart showing operations of a server 5, a computer 7.
FIG. 10 is a flowchart showing operations of the server 5, the computer 7.
FIG. 11 is a diagram showing a log-in screen 301.
FIG. 12 is a diagram showing goods selection screen 311.
FIG. 13 is a diagram showing goods screen 321 displayed when points are enough.
FIG. 14 is a diagram showing goods screen 331 displayed when points are short.
FIG. 15 is a diagram showing a confirmation screen 341.
FIG. 16 is a diagram showing a point purchase screen 351.
FIG. 17 is a diagram showing a payment method selection screen 361.

### Best Modes for Carrying Out the Invention

Embodiments of the present invention will hereunder be described in detail based on the drawings.

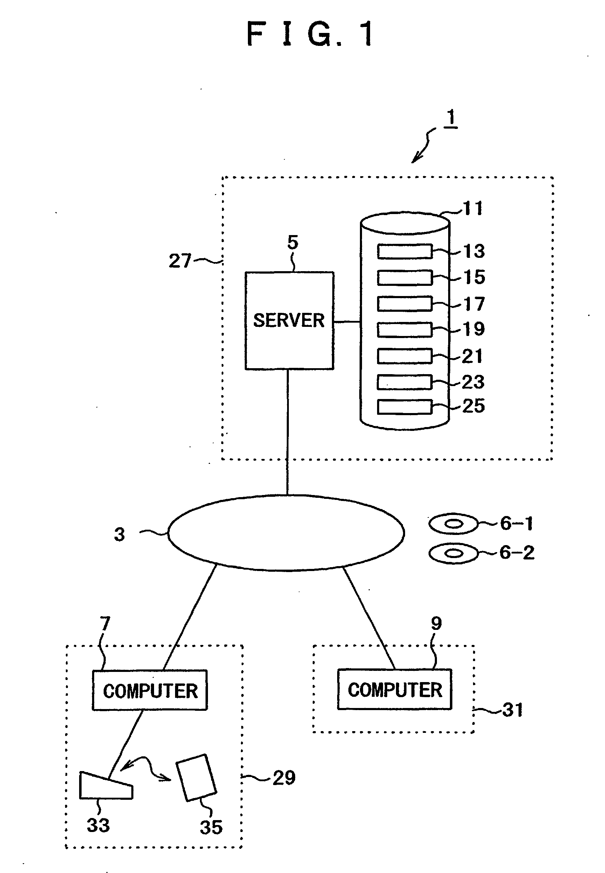

FIG. 1 is a schematic diagram of a configuration of a point selling system 1 according to an embodiment of the present invention.

A card company 27 is a card company serving as a company or the like providing a point service, and issues a card to a member 29 and performs processing or the like related to provision of the point service and settlement of accounts of the member 29, an affiliated store 31 and the like.

The point service means a service by which, for example, to offer points to the member according to usage (an amount spent or the like), to exchange a prescribed number of points for a prescribed goods, a prescribed service or the like.

The member 29 is a member who owns the card issued by the card company 27. The member 29, for example, uses the affiliated store 31 and makes payments with this card. The affiliated store 31 is a card service establishment or the like where the card issued by the card company 27 can be used, and it, for example, runs a shop, a virtual shop on a network or the like. The card company 27, for example, offers points to the member 29 according to an amount spent using the card or the like. The member 29 can exchange the points for prescribed goods.

The card is, for example, a credit card, a point card, and a card through which, for example, points are offered according to an amount spent or the like. Further, the card may be an IC card or the like functioning as a credit card, a point card or the like. In this case, the member 29 can use the IC card as a credit card, a point card or the like. In the following description, the card shall be an IC card having a credit card function, and shall also be a credit card through which points are offered according to an amount spent or the like.

Connected to a network 3 are a server 5, computers 7, 9 and the like. The network 3 operates such that devices connected thereto, whether wired or wireless, can send and receive information to and from their destination device(s) upon establishment of a session therebetween. Thus, although the network 3 is depicted in FIG. 1 so as to be connected via single trunk lines, it may be implemented by multiple networks combined together via gateways, such as the Internet. Further, as to its connectivity, the network 3 may not be directly connected to the trunk lines, which are so-called backbones, but may be temporarily connected through a PPP (Point-to-Point Protocol) connection or the like, as long as the devices connected to the network 3 can send and receive information to and from their destination device(s) upon establishment of a session therebetween.

The computer 7 is a computer or the like serving as a terminal device belonging to the member 29, and includes, for example, a personal computer, a portable information terminal, a cellular phone or the like. This computer 7 is configured to be able to send and receive information via the above-mentioned network 3 using a communications function of its own or a Web browser application separately installed thereon. A reader/writer (reading/writing device) 33 is connected to the computer 7. The reader/writer 33 performs operations such as reading and writing various data from and to the IC card 35, and also encrypts data read from the IC card 35 using triple DES or the like, for sending to the computer 7.

The member 29 owns the IC card 35. The IC card 35 has an IC chip (not shown) and the like. The IC card 35 has a credit card function, and holds within the IC chip credit card information, such as a credit number, a credit card expiration date, and the like. Therefore, this IC card can function as a credit card when used together with the reader/writer 33.

Known schemes are suitably applicable as specific techniques for reading and writing data within the IC card 35 by the reader /writer 33. As an example, if the IC card 35 is a so-called contactless IC card, the reader/writer 33 reads and writes data from and to the IC card 35 via electromagnetic waves or the like. In order to receive the electromagnetic waves or the like, the IC card 35 is provided with an antenna section, and sends and receives various information held within the IC chip via this antenna section and a built-in sending/receiving section. Further, if the IC card 35 is a so-called contact IC card, the reader/writer 33 is provided with a contact section that directly contacts a contact section of the IC card 35, for sending and receiving of various information via both the contact sections.

The computer 9 is a computer or the like serving as a terminal device belonging to the affiliated store 31, and includes, for example, a personal computer, a portable information terminal. Preferably, the computer 9 is provided with a function of sending various information to the computer 7 responsive to access from the computer 7. Therefore, it is preferable that the computer 9 has a so-called Web server function. Further, when the member 29 uses the affiliated store 31 with the IC card 35, the computer 9 sends to the server 5 the credit card information, sales data (names of merchandise sold, sales figures and the like) and the like. Therefore, it is preferable that the computer has a function as a so-called electronic commerce server.

The server 5 is a server computer or the like serving as a point offering server, a point selling server belonging to the card company 27. The server 5 is provided with a database 11 having member data 13, point management data 15, point history data 17, point purchase data 19, point offer data 21, point sale data 23, goods data 25 and the like. The member data 13, the point management data 15, the point history data 17, the point purchase data 19, the point offer data 21, the point sale data 23, the goods data 25 will be described later. The server 5 performs processing related to offering, selling points to the IC card 35, and also exchanging points for goods.

In the above configuration, the server 5, the computers 7, 9 may be configured a plurality of computers or the like, servers or the like operating collectively. In this case, it is preferable that each computer or the like share a part of the function the server 5 or the like has, or perform (in a pseudo manner) simultaneous processing using a technique such as time division processing. Further, when the card company 27, the affiliated store 31 and the like form one entity, or in a like case, it may be arranged such that a single server operates as both the server 5, the computer 9.

Further, programs executed for processing by the server 5, the computers 7, 9 and the like, and data held and recorded on the server 5 and the like can be held on recording media such as CD-ROMs 6-1, 6-2, and can also be distributed as held on the CD-ROMs 6-1, 6-2. Alternatively, such programs, data may be distributed via the network 3.

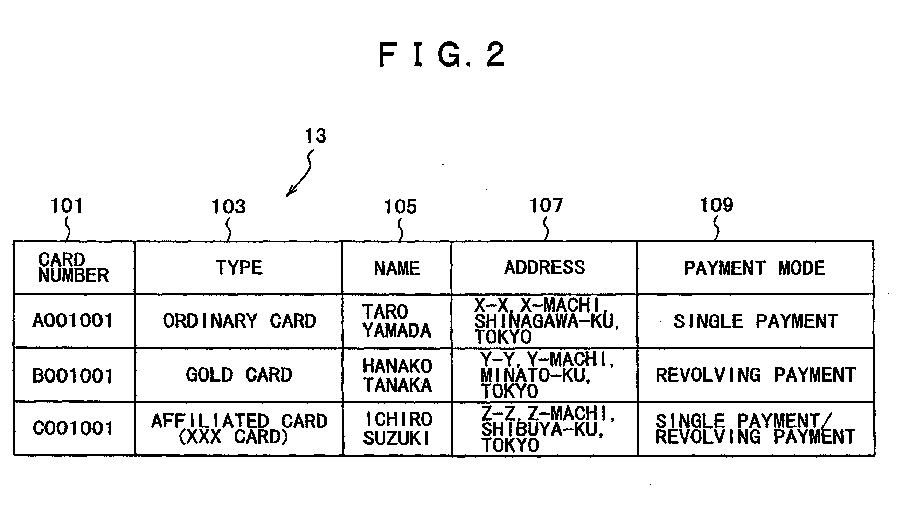

FIG. 2 is a diagram showing the member data 13 saved in the database 11. The member data 13 is attribute information or the like about the member, corresponds the member 29, the IC card 35 and the like to one another, and holds personal information (a name, an address and the like) and the credit card information (the credit card number, the credit card expiration date and the like) about the member 29. The member data 13 is used for processing related to authentication of the member 29.

The member data 13 has data fields for a card number 101, a type 103, a name 105, an address 107, a payment mode 109 or the like.

The card number 101 is a code string including numerals, characters, symbols and the like for specifying the IC card 35 (credit card), and is a code string such as, for example, "A001001". The card number 101 may be a credit card number or the like. The type 103 indicates a type or the like of the IC card 35, and is, for example, "a supplemental member card", "a principal member card", "an ordinary card", "a gold card", "an affiliated card (XXX card)". The name 105 indicates the name or the like of the member 29 who owns the IC card 35, and is, for example, "Taro Yamada". The address 107 indicates the address or the like of the member 29 who owns the TC card 35, and is, for example, "X-X, X-machi, Shinagawa-ku, Tokyo".

The payment mode 109 indicates a mode of payment made by the IC card 35. For example, "single payment" means that all payments are made exclusively in single payment; "revolving payment" means that all payments are made exclusively in revolving payment; and "single payment/revolving payment" means that payments can be made selectively either in single payment or revolving payment. It should be noted that the revolving payment is a system or the like in which, for example, a fixed amount of money commensurate with the outstanding balance of an amount spent is paid monthly.

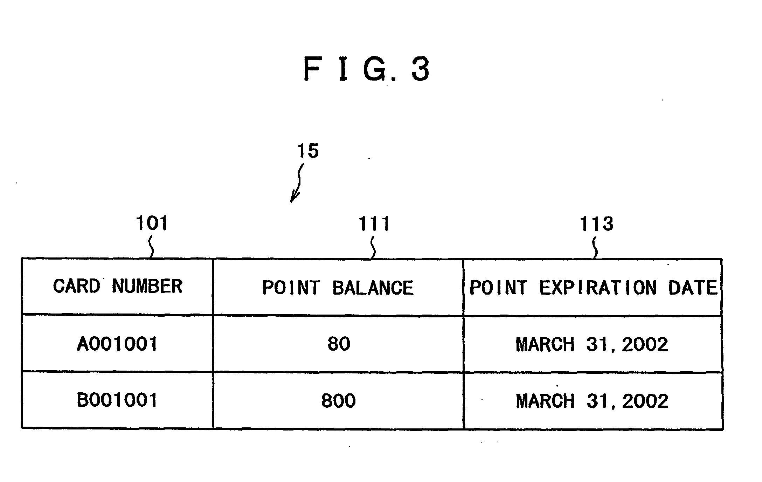

FIG. 3 is a diagram showing the point management data 15 saved in the database 11. The point management data 15 holds information about the balance and the like of points offered to the IC card 35 (earned by the member 29).

The point management data 15 has data fields for the card number 101, a point balance 111, a point expiration date 113 or the like.

The card number 101 is similar to the card number 101 of the member data 13 (FIG. 2). The point balance 111 indicates the balance of points offered to the IC card 35, and is, for example, "80" (80 points). The point expiration date 113 indicates an expiration date of points shown in the point balance 111, and is, for example, "March 31, 2002". It should be noted that in this embodiment, the point expiration date of the points offered, for example, between April 1, 2001 and March 31, 2002 is March 31, 2002.

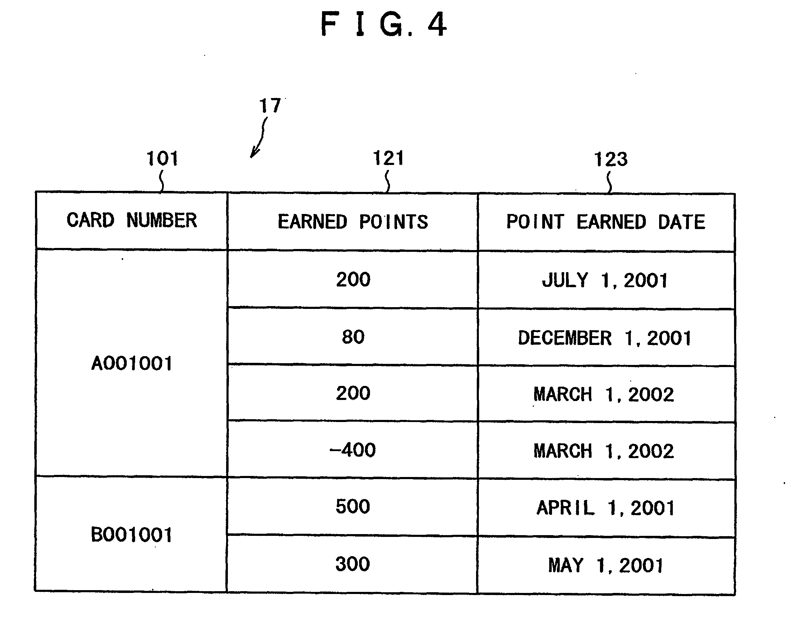

FIG. 4 is a diagram showing the point history data 17 saved in the database 11. The point history data 17 holds information about the history of points offered to the IC card 35 (earned by the member 29), of points used (used by the member 29), or the like.

The point history data 17 has data fields for the card number 101, earned points 121, a point earned date 123 and the like.

The card number 101 is similar to the card number 101 of the member data 13 (FIG. 2). The earned points 121 indicate points offered to the IC card 35 (earned by the member 29), points used (used by the member 29), and are, for example, "200" (200 points are offered), "-400" (400 points are used). The point earned date 123 indicates a date/time on which points are offered to the IC card 35, a date/time on which points are used, or the like, and is, for example, "July 1, 2001".

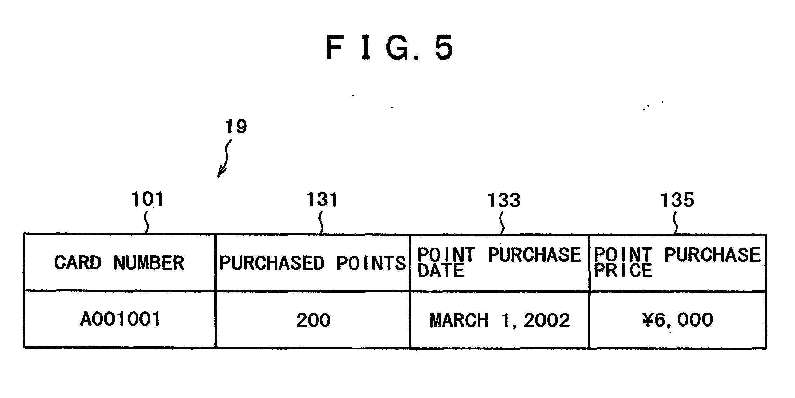

FIG. 5 is a diagram showing the point purchase data 19 saved in the database 11. The point purchase data 19 indicates information about the history of point purchase, or the like.

The point purchase data 19 has data fields for the card number 101, purchased points 131, a point purchase date 133, a point purchase price 135 and the like.

The card number 101 is similar to the card number 101 of the member data 13 (FIG. 2). The purchased points 131 indicate points the member 29 purchased from the card company 27, and are, for example, "200" (200 points are purchased). The point purchase date 133 indicates a date/time or the like on which points are purchased, and is, for example, "March 1, 2002". The point purchase price 135 is the purchase price of points, and is, for example, "¥6,000" when 200 points are purchased at a unit purchase price of ¥30.

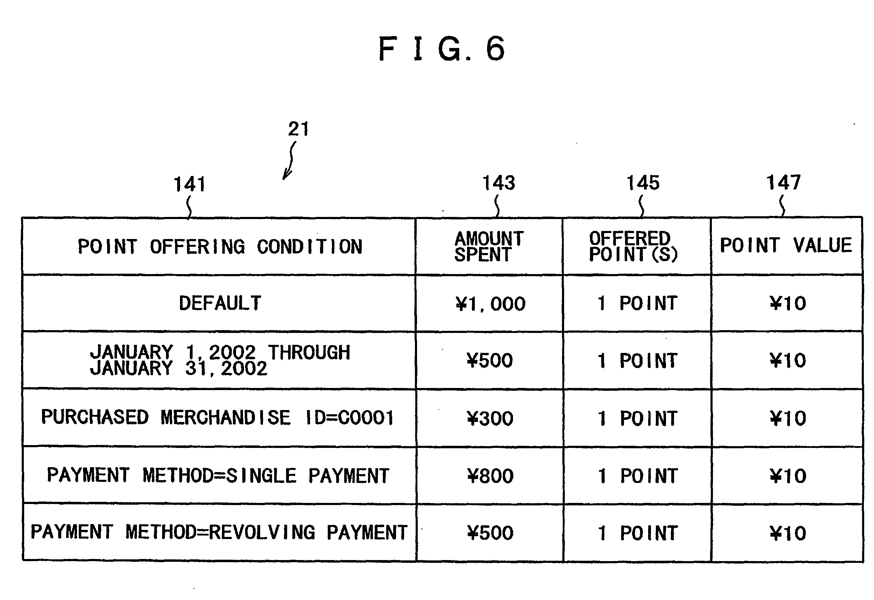

FIG. 6 is a diagram showing the point offer data 21 saved in the database 11. When the member 29 uses the affiliated store 31 through the IC card 35, point(s) is offered to that IC card 35. The point offer data 21 indicates information about conditions or the like of this point offer.

The point offer data 21 has data fields for a point offering condition 141, an amount spent 143, offered point(s) 145, a point value 147 or the like.

The point offering condition 141 indicates a condition or the like according to which point(s) is offered, and is, for example, "default" (regular), " the card is used between January 1, 2002 and January 31, 2002", "the purchased merchandise ID is C0001", "paid in single payment", "paid in revolving payment". The amount spent 143, the offered point (s) 145 indicate point (s) offered to the IC card 35 when the member 29 uses the affiliated store 31 through the IC card 35, and, for example, "¥1000" as the amount spent 143 and "1 point" as the offered point(s) 145 indicate that one point is offered every ¥1000 spent. The point value 147 indicates the value of one point.

According to the point offer data 21 shown in FIG. 6, for example, one point for every ¥800 spent is offered if paid in single payment, and the value of one point is ¥10.

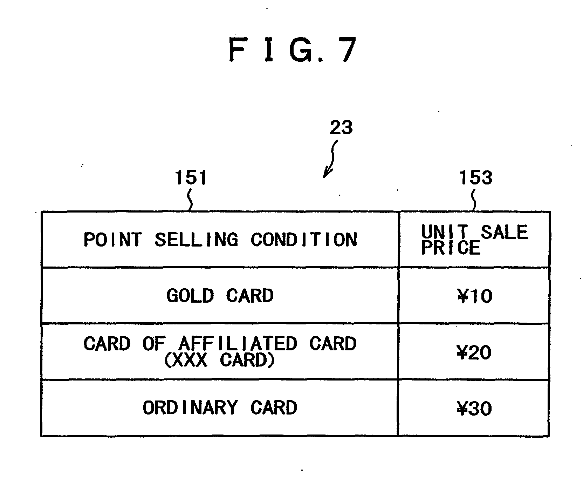

FIG. 7 is a diagram showing the point sale data 23 saved in the database 11. The point sale data 23 indicates information about conditions or the like applicable when the card company 27 sells points to the member 29.

The point sale data 23 has data fields for a point sale condition 151, a unit sale price 153 and the like.

The point sale condition 151 indicates a condition or the like for selling points, and is, for example, "the IC card 35 is a gold card", "the IC card 35 is a tie-up card with an XXX card", "the IC card 35 is an ordinary card". The unit sale price 153 indicates a sale price per point, and is, for example, "¥10".

According to the point sale data 23 shown in FIG. 7, for example, if the IC card 35 is a gold card, each point is sold at ¥10, and if the IC card 35 is an ordinary card, each point is sold at ¥30.

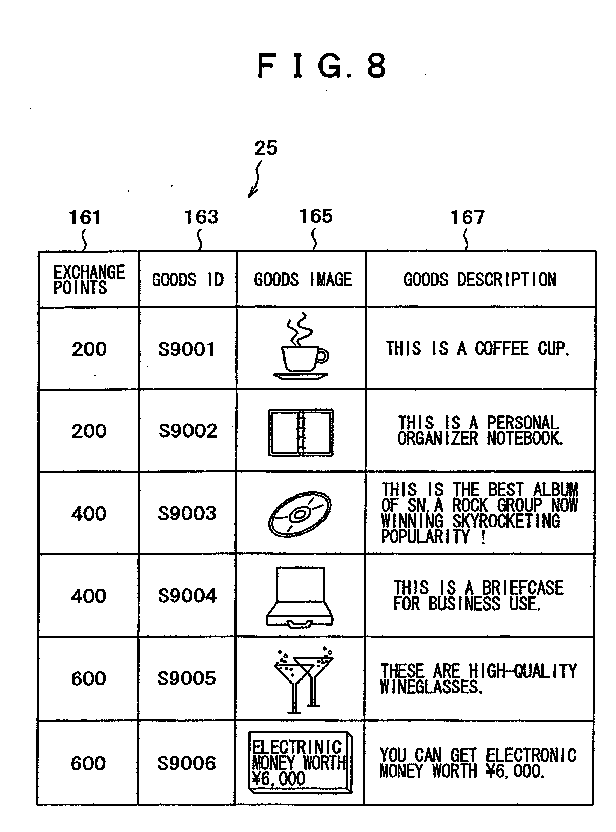

FIG. 8 is a diágram showing the goods data 25 saved in the database 11. The goods data 25 is goods exchange list indicating information about points required for goods exchange, goods and the like. The server 5 references the goods data 25 to perform processing related to exchange of points for goods.

The goods data 25 has data fields for exchange points 161, goods ID 163, goods image 165, goods description 167 or the like.

The exchange points 161 indicate points required for goods exchange, and are, for example, "200" (200 points). The goods ID 163 is a code string including numerals, characters, symbols and the like specifying goods for exchange, and is, for example, "S9001". The goods image 165 is image data or the like of goods for exchange. The goods description 167 is the name, caption or the like of goods for exchange.

According to the goods data 2 5 shown in FIG. 8, for example, 200 points are used so that they can be exchanged for goods whose goods ID 163 is "S9001" (a coffee cup), "S9002" (a personal organizer notebook).

Next, the operation of the point selling system 1 in the embodiment of the present invention will be described. It should be noted that in the following description, the IC card 35 has a credit card function, that the member 29 utilizes the IC card 35 as a credit card, and that the card company 27 offers points to the IC card 35 (member 29) according to an amount spent or the like.

When the member 29 accesses a site of the affiliated store 31 (computer 9) on the network to browse merchandise available at the affiliated store 31, and as a result, wishes to purchase merchandise available at the affiliated store 31, the computer 7 (member 29) reads, from the IC card 35 through the reader/writer 33, the credit card information (the credit card number, the credit card expiration date and the like) and the like held on the IC card 35. The computer 7 sends to the computer 9 the credit card information and the like read from the IC card 35, information about the merchandise for purchase, and the like.

The computer 9 (affiliated store 31) sends to the server 5 the credit card information, information about the merchandise sold (the name of the merchandise sold, the sales figure and the like) and the like. The server 5 (card company 27) references the member data 13, and performs authentication processing, settlement procedure and the like for the IC card 35 based on the credit card information, the information about the merchandise sold and the like.

The server 5 references the point offer data 21, offers points to the IC card 35 based on the condition 141, the amount spent 143 and the like, and updates the point management data 15 (the point balance 111, the point expiration date 113 and the like), point history data 17 (the earned points 121, the point earned date 123 and the like) corresponding to the card number 101 of that IC card 35.

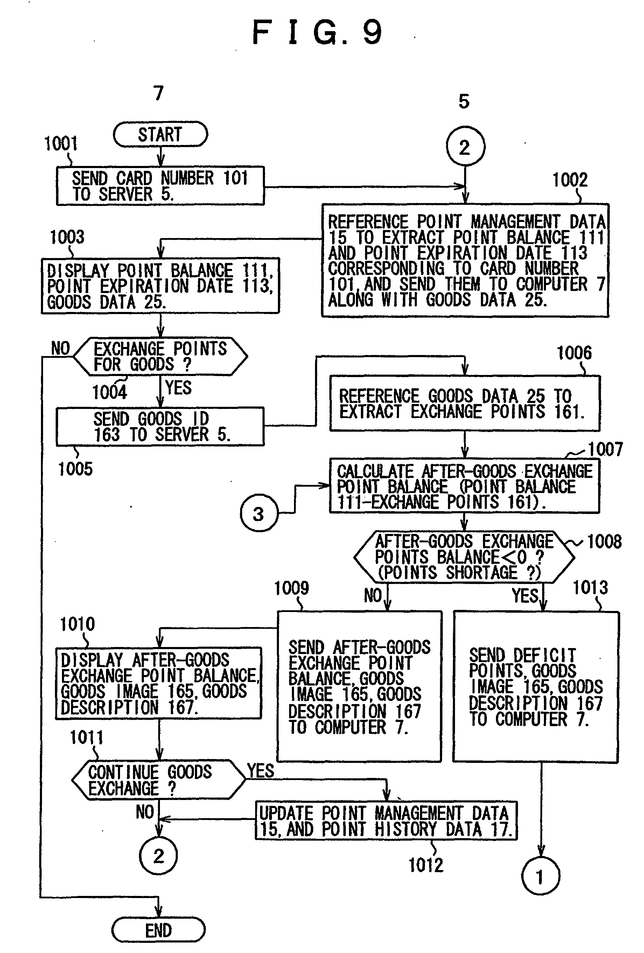

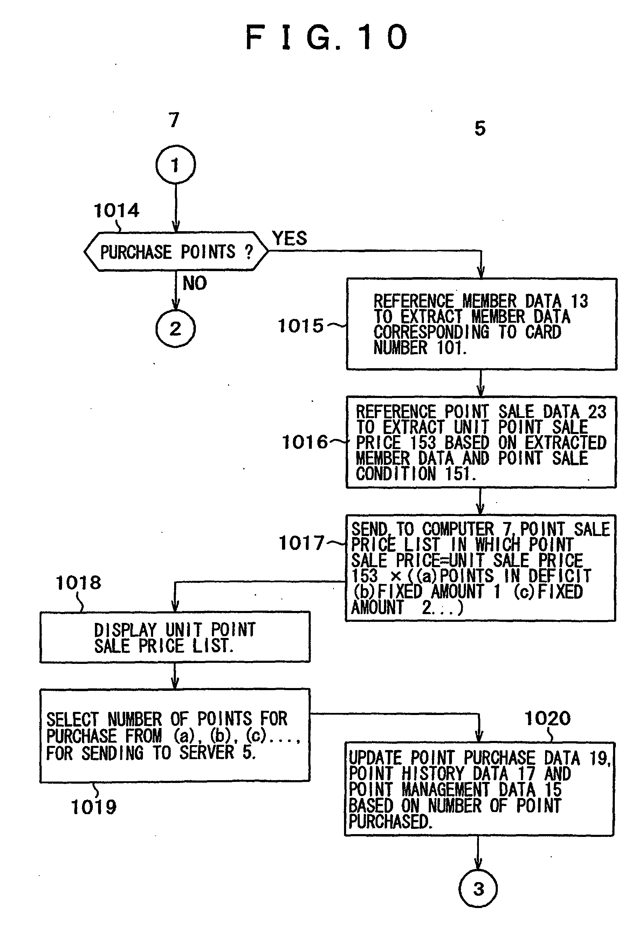

FIG. 9, FIG. 10 show flowcharts showing operations of the server 5, the computer 7 performed when the member 29 exchanges his or her points accumulated on the IC card 35 for goods, and further purchases points.

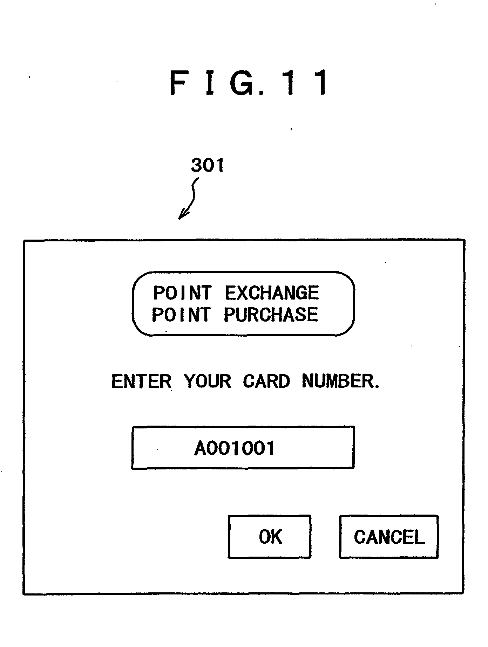

The computer 7 (member 29) accesses the server 5 (card company 27) to display a log-in screen 301 for point exchange, such as shown in FIG. 11. When the member 29 enters his or her card number and the like over the log-in screen 301, the computer 7 sends the card number and the like to the server 5 (step 1001). It should be noted that when sending the card number and the like, it may be arranged such that the computer 7 reads data such as the card number from the IC card 35 via the reader/writer 33.

The server 5 (card company 27) references the point management data 15 to extract the point balance 111, point expiration date 113 corresponding to the card number 101, for sending to the computer 7 along with the goods data 25 (step 1002).

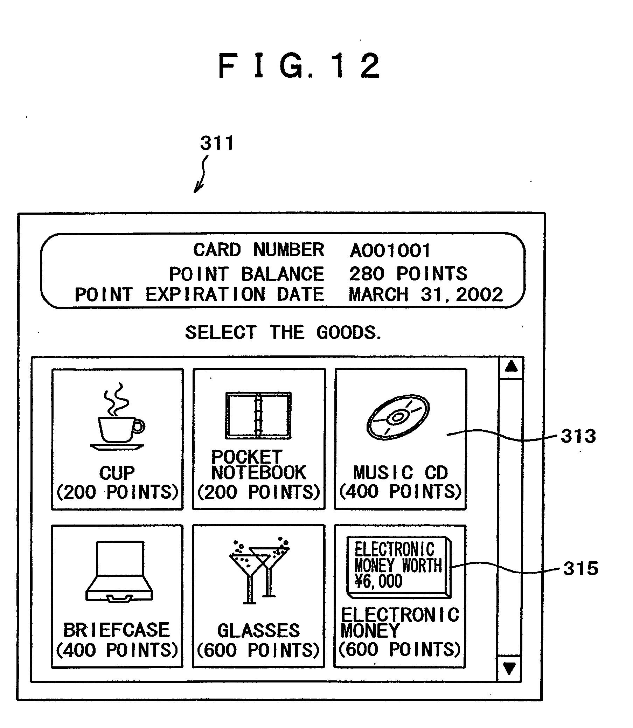

The computer 7 displays goods selection screen 311 such as shown in FIG. 12 (step 1003). The goods selection screen 311 displays the point balance 111, the point expiration date 113, the goods data 25 and the like.

If the points are not exchanged for goods (No in step 1004), then the server 5, the computer 7 end the process. If the points are exchanged for goods (Yes in step 1004), the member 29 selects goods which the points are exchanged for, and performs an operation such as clicking on, for example, an image 313 of "Music CD" with a mouse. The computer 7 sends the goods ID 163 of the selected goods to the server 5 (step 1005).

It should be noted that it may be arranged such that each goods image, such as the image 313, is hyperlinked to "http://www.xxx.com/cgi?=S9003" or the like, whereby when the operation such as clicking on the image in question is performed, "S9003" or the like is sent to the server 5 as the goods ID 163.

The server 5 references the goods data 25 to extract the exchange points 161, goods image 165, goods description 167 and the like corresponding to the goods ID 163 sent (step 1006). Next, the server 5 calculates an after-goods exchange point balance (step 1007). The after-goods exchange point balance is the balance of points that will result after having exchanged points for goods, and is (after-goods exchange point balance) = (point balance 111) - (exchange points 161).

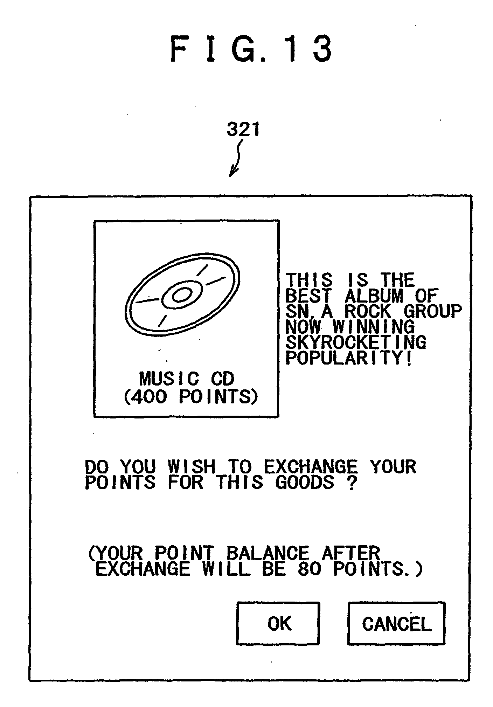

If (after-goods exchange point balance)≧0 (No in step 1008), then the server 5 sends the after-goods exchange point balance, the goods image 165, the goods description 167 and the like to the computer 7 (step 1009). The computer 7 displays goods screen 321 such as shown in FIG. 13 (step 1010). The goods screen 321 displays the after-goods exchange point balance, the goods image 165, the goods description 167 and the like.

If the points are not exchanged for goods (No in step 1011), then the server 5, the computer 7 repeat the processing from step 1002. If the points are exchanged for goods (Yes in step 1011), the server 5 adds event data to the point history data 17, and updates the point balance 111, the point expiration date 113 in the point management data 15 based on this point history data 17 (step 1012).

When adding the event data to the point history data 17 in step 1012, the server 5 operates as follows. For example, when the point balance of "A001001" as the card number 101 was exchanged for goods worth 400 points on March 1, 2002, the server 5 adds, to the point history data 17, event data such as "A001001" as the card number 101, "-400" as the earned points 121, "March 1, 2002" as the point earned date 123. It should be noted that since the points were exchanged for the goods worth 400 points, the earned points 121 in the point history data 17 are held as minus points, such as, for example, "-400".

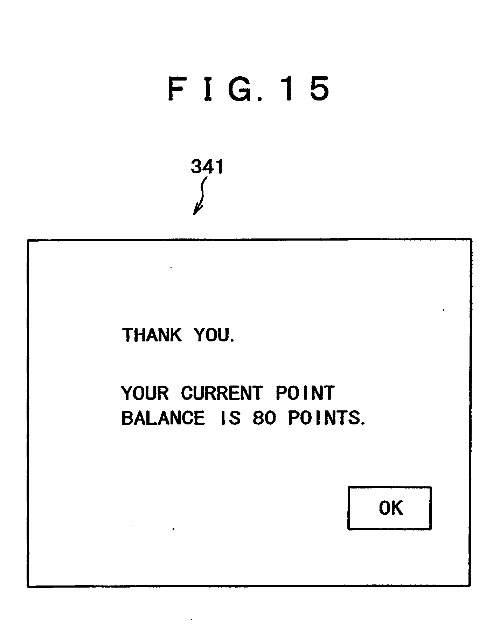

The server 5 sends a confirmation screen 341 such as shown in FIG. 15 to the computer 7 for display. The confirmation screen 341 may display a new point balance and the like, for example. After this, the server 5, the computer 7 repeat the processing from step 1002.

If (after-goods exchange point balance) < 0, namely, there are deficit points (Yes in step 1008), then the server 5 sends the deficit points, the goods image 165, the goods description 167 and the like to the computer 7 (step 1013). It should be noted that (deficit points) = - (after-goods exchange point balance).

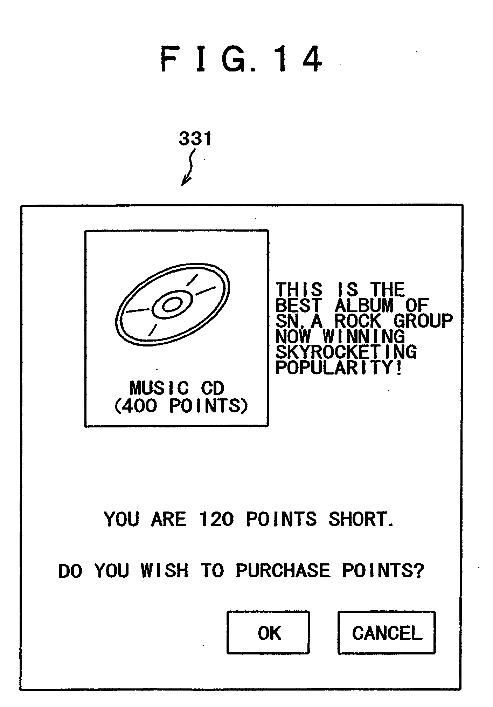

Next, the computer 7 displays goods screen 331 such as shown in FIG. 14 (step 1014). The goods screen 331 displays the deficit points, the goods image 165, the goods description 167 and the like.

If points are not purchased (No in step 1014), then the server 5, the computer 7 repeat the processing from step 1002.

If points are purchased (Yes in step 1014), then the server 5 references the member data 13 to extract the type 103, payment mode 109 and the like corresponding to the card number 101 (step 1015). Next, the server 5 references the point sale data 23 to extract the unit sale price 153 of points based on the extracted member data and the point selling condition 151 (step 1016).

The server 5 prepares a point sale price list, such as (point sale price) = (unit sale price 153) x ((a) deficit points, (b) fixed amount 1, (c) fixed amount 2 ...), for sending to the computer 7 (step 1017). It should be noted that it may be arranged such that if, for example, deficit points are 120 points, then points which are more than the deficit points, such as 200 points as (b) fixed amount 1, 300 points as (c) fixed amount 2 or the like are sold.

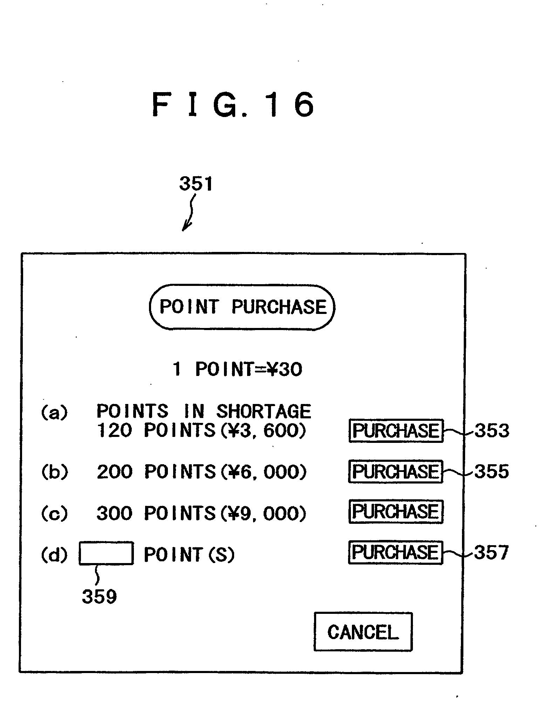

The computer 7 displays a point purchase screen 351 such as shown in FIG. 16 (step 1018). The point purchase screen 351 displays the point sale price list and the like. When the member 29 selects the number of points for purchase, the computer 7 sends the selected number of points for purchase to the server 5 (step 1019).

It should be noted that referring to FIG. 16, the member 29 performs the operation such as clicking on "Purchase" 353 with the mouse when purchasing only (a) deficit points (120 points), performs the operation such as clicking on "Purchase" 355 with the mouse when purchasing (b) 200 points, and directly enters the number of points for purchase to a field 359 and performs the operation such as clicking on "Purchase" 357 when purchasing a desired number of points.

The server 5 adds this event to the point history data 17 (the earned points 121, the point earned date 123 and the like), the point purchase data 19 (the purchased points 131, the point purchase date 133, the point purchase price 135 and the like) based on the number of points purchased. The server 5 calculates the point balance 111, the point expiration date 113 and the like based on the point history data 17, and updates the point management data 15 (step 1020). After this, the server 5, the computer 7 repeat the processing from step 1007.

When the card number 101 is sent from the computer 7 through the above process, the server 5 references the point management data 15 to extract the point balance 111, point expiration date 113 corresponding to that card number 101, for sending to the computer 7 along with the goods data 25.

When the goods ID 163 of the goods for which the points are to be exchanged is sent from the computer 7, the server 5 references the goods data 25 to extract the exchange points 161 corresponding to that goods ID 163, and calculates its after-goods exchange point balance ((point balance 111)-(exchange points 161)).

If (after-goods exchange point balance)≧0, the after-goods exchange point balance is displayed to the computer 7, and updates the point management data 15, the point history data 17. If (after-goods exchange point balance) < 0, then the deficit points (= - (after-goods exchange point balance)) are displayed to the computer 7 to encourage the purchase of point. When the computer 7 side desires to purchase points, the server 5 references the member data 13 to extract the member data corresponding to the card number 101, references the point sale data 23 to extract the unit sale price 153 based on the extracted member data and the point sale condition 151, and prepares the point sale price list, for sending to the computer 7.

The server 5 updates the point purchase data 19, the point history data 17, the point management data 15 according to the number of purchased points sent from the computer 7.

Usually, expiration date(s) is set for points, and the points become expired when their expiration date(s) passes, and further, the number of points not amounting to a prescribed number cannot be exchanged for goods.

In this way, when exchanging points for goods and even if the point balance is in deficit, the member 29 can purchase deficit points orpoints which are more than the deficit points, whereby expired points can be reduced and a point exchanging rate can be improved.

Further, the card company 27, by, for example, fixing unit sale prices of points according to the membership type, the card type or the like of the member 29, can expect profits from selling points, advertising effects for encouraging use of its cards.

In the foregoing, while the preferred embodiments of the point selling system, the point selling server and the like according to the present invention have been described while referring to the attached drawings, the present invention is not limited to such examples. It is apparent that a person skilled in the art could make various modifications or alterations within the scope of the technical ideas disclosed in the present invention, and it should be understood that any and all of them are belong to the technical scope of the present invention.

While the card, the IC card are described to have a credit card function, that is, a future-payment (credit-payment) settlement function in the above-described embodiments, they may not necessarily have a settlement function as long as they offer points according to an amount spent or the like.

Further, the issuing company issuing the card, the IC card, the affiliated store where the cards can be used may be one entity. That is, it may be arranged such that a single server computer operates as the server 5, the computer 7. For example, a shop, a virtual shop on a network may originally issue a point card not having a credit card function, and may offer as well as sell points to the card according to use of the card at the shop or its affiliated shop or the like.

Still further, while points are offered on commercial transactions at a virtual shop in one of the above-described embodiments, points may also be offered on commercial transactions in an actual shop (shop in real space). In this case, only operations, such as point management, exchange of points for goods, point sale, will be performed in computer space.

It should be noted that it may be arranged such that the company, the shop or the like providing the point service issues a membership number or the like which is equivalent to the card number, instead of issuing the card, to the member, and the server 5 and the like may perform processing related to points using this membership number or the like.

Further, it may be arranged such that processing related to point purchase price settlement or the like is performed using a credit card, electronic money, a debit card, cash, a prepaid card or the like, including the above-mentioned point card not having a credit card function. That is, future payment (credit payment) by credit card or the like, pre-payment by electronic money or the like, spot payment by debit card or the like can be used as a means of settlement of point purchase prices in the point selling system 1.

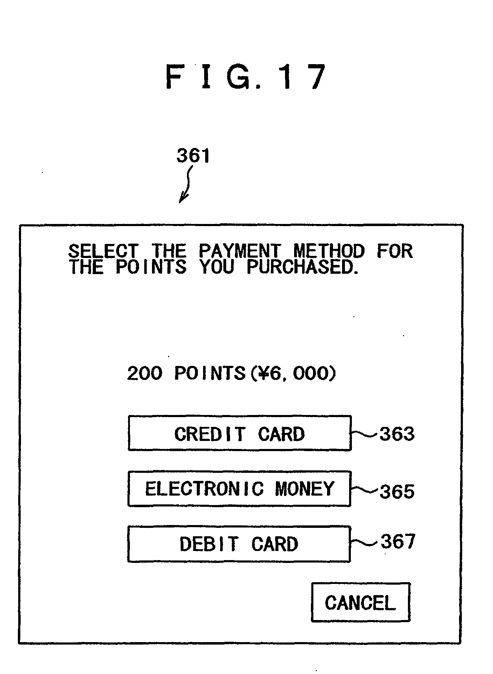

In this case, it may be arranged such that the server 5 makes the computer 7 to display a payment method selection screen 361 such as shown in FIG. 17 after having processed step 1019 (FIG. 10) so as to be able to select the payment method for the point purchase price by the member 29.

When "Credit card" 363 is selected, the server 5 performs processing related to a procedure for settlement by credit card based on the point purchase data 19 updated in step 1020 (FIG. 10).

It should be noted that it may also be arranged such that a credit card which is not related to the card or the like to which points have been offered can be used.

In this case, the computer 7 sends to the server 5 the credit card number, the credit card expiration date and the like entered by the member 29 or read via the reader/writer 33, and the server 5 performs processing related to a procedure for settlement by that credit card based on the point purchase data 19 updated in step 1020 (FIG. 10).

When "Electronic money" 365 is selected, the server 5 sends to the computer 7 information about settlement of the purchase price based on the point purchase data 19 updated in step 1020 (FIG. 10), and updates information about electronic money held on the IC card, via the reader/writer. Here, the electronic money means a pecuniary value in the form of electronic information, and is used as a means of settlement. It should be noted that an electronic money function may be not only a function of the IC card or the like, but also a function of the computer 7.

When "Debit card" 367 is selected, the computer 7 sends to the server 5 a debit card number (a bank account number or the like) and the like entered by the member 29 or read via the reader/writer 33, and the server 5 performs processing related to a procedure for settlement by debit card based on the point purchase data 19 updated in step 1020 (FIG. 10).

Here, the settlement by debit card means debiting from a bank account or the like on the spot, unlike that by credit card.

Further, while information about points, such as the point management data 15, the point history data 17, the point purchase data 19, is held in the database 11 on the server 5 side, it maybe arranged such that the information is recorded also on the IC card 35. In this case, it may be arranged such that the computer 7 and the like read these items of information about points from the IC card 35 for display on their screen, as necessary. In this case, the member 29 can check his or her point balance and the like without access to the server 5.

Further, the server 5 (card company 27) may set a point sale period based on the point expiration date 113. In this case, for example, by starting to sell points one month before the point expiration date, the percentage of purchased points in the point balance can be adjusted.

Further, in one of the above-described embodiments, the point management data and the point history data may also be merged and managed collectively. In this case, the point expiration date can be set for each earned point.

Further, while the points dealt with in the above-described embodiments have been described as being offered according to an amount spent by merchandise purchase or the like at the affiliated store or the like, they are not limited thereto. For example, points may be offered according to not only an amount spent, but also a period of use, a frequency of use, merchandise purchased, a service purchased, a payment method, a membership type, a distance traveled by transportation, answering a questionnaire, browsing an Internet information resource or the like.

The payment method means a mode of payment or the like and is, for example, by cash, prepaid card, single payment, installment payment in credit card settlement.

The membership type means a type of membership, a type of credit card or the like, and is, for example, "a gold member", "a gold card", "an ordinary member", "an ordinary card".

The distance traveled by transportation means a distance traveled by transportation, such as an airplane, a railroad, a ship, and points are offered to a passenger or the like according to a distance travelled by airplane, for example. The points may be called mileage or the like.

The answering a questionnaire means answering a questionnaire for market research, or the like, and, for example, points are offered to a respondent or the like to the questionnaire according to how the questionnaire is answered.

The browsing an Internet information resource means browsing a Web page linked to banner ads, acces sing a particular website, or the like, and, for example, points are offered to a visitor or the like according to the frequency at which a particular Web page is accessed, or the like.

Further, while the server 5 (card company 27), the computer 9 (affiliated store 31) and the like are connected via the network 3 such as the Internet in the above-described embodiments, it may also be arranged such that they are connected using a private line, an OBN (Open Business Network), an Internet VPN (Virtual Private Network) or the like.

The OBN is an IP (Internet Protocol) dedicated to business use, which is independent of the Internet, is low cost, and can implement high security comparable to a private line, broadband-based high-speed communications and the like. The Internet VPN is a service by which the Internet can be used like a private network.

### Industrial Applicability

There can be provided a point selling server, a point selling method which make it possible to reduce the expiration of points resulting from being to fall short of a prescribed number and the passage of their expiration date(s).

## Claims

1. A point selling server **characterized by** comprising:
holding means for holding information specifying a member and a point balance, as associated with each other;
second holding means for managing goods identifying information for exchange based on a number of points, and a number of corresponding points, as associated with each other;
means for referencing said holding means and said second holding means, and comparing a point balance of a member with a number of points corresponding to a piece of goods specified in an exchange request when receiving the exchange request for the goods from the member which includes the member specifying information; and
means for proposing sale of a prescribed number of points when the point balance of the member is short of the points corresponding to the goods specified in the exchange request.

2. The point selling server according to claim 1, wherein said points comprise points rewarded according to at least one of the following items:
(1) a price of the merchandise for purchase;
(2) an amount spent using a credit card;
(3) a period of use of the merchandise;
(4) a frequency of use of the merchandise;
(5) a distance traveled by transportation;
(6) answering a questionnaire; or
(7) browsing an Internet information resource.

3. The point selling server according to claim 1, **characterized by** further comprising:
means for calculating a difference between said point balance of the member and said number of points corresponding to the goods,
wherein said prescribed number of points comprises the calculated number of points in deficit.

4. The point selling server according to claim 1, wherein
said holding means manages further an expiration date of point(s) along with said member specifying information, said point balance, and
said exchange request for the goods made by the member is accepted only within a prescribed period from the point expiration date set for the member.

5. The point selling server according to claim 1, wherein
said holding means further holds point sale data in which a point sale condition and a unit sale price are corresponded to each other; and
said sale proposing means determines the unit sale price applicable when proposing the sale of the number of points, based on said point sale condition.

6. The point selling server according to claim 1, wherein
said holding means further holds point sale data in which a point sale condition and a unit sale price are corresponded to each other, and member data in which said member specifying information and attribute information about the member are corresponded to each other; and
said sale proposing means determines the unit sale price applicable when proposing the sale of the number of points, based on said point sale condition and said attribute information about the member.

7. A point selling method **characterized by** comprising the steps of:
managing information specifying a member and a point balance, as associated with each other;
managing goods identifying information for exchange based on a number of points, and a number of corresponding points, as associated with each other; comparing the point balance of a member with a number of points corresponding to a piece of goods specified in an exchange request when receiving the exchange request for the goods from the member through indication of the member specifying information; and
proposing sale of a prescribed number of points when the point balance of the member is short of the number of points corresponding to the goods specified in the exchange request.

8. The point selling method according to claim 7, wherein said points comprise points rewarded according to at least one of the following items:
(1) a price of the merchandise for purchase;
(2) an amount spent using a credit card;
(3) a period of use of the merchandise;
(4) a frequency of use of the merchandise;
(5) a distance traveled by transportation;
(6) answering a questionnaire; or
(7) browsing an Internet information resource.

9. The point selling method according to claim 7 **characterized by** further comprising the step of:
calculating a difference between said point balance of the member and said number of points corresponding to the goods,
wherein said prescribed number of points comprises the calculated number of points in deficit.

10. The point selling method according to claim 7, **characterized by** further comprising the steps of:
managing further an expiration date of point(s) along with saidmember specifying information and said point balance; and
accepting said exchange request for the goods made by the member only within a prescribed period from the point expiration date set for the member.

11. A point selling server **characterized by** comprising:
second holding means for managing goods identifying information for exchange based on a number of points, and a number of corresponding points, as associated with each other;
means for referencing said second holding means, and comparing a point balance of a member with a number of points corresponding to a piece of goods specified in an exchange request when receiving the exchange request for the goods in which information specifying the member and the point balance are included as associated with each other; and
means for proposing sale of a prescribed number of points when the point balance of the member is short of the number of points corresponding to the goods specified in the exchange request.

12. A point transaction server **characterized by** comprising:
point offering means for offering a point to a member according to usage;
holding means for holding information specifying the member and a point balance, as associated with each other;
second holding means for managing goods identifying informationforexchangewithpoints, andcorrespondingpoints, as associated with each other;
means for referencing said holding means and said second holding means, and comparing a point balance of a member with a number of points corresponding to a piece of goods specified in an exchange request when receiving the exchange request for the goods from the member which includes the member specifying information; and
means for proposing sale of a prescribed number of points when the point balance of the member is short of the number of points corresponding to the goods specified in the exchange request.

13. A program **characterized by** making a computer to function as the point selling server according to any of claims 1 to 6.

14. A recording medium **characterized by** having recorded thereon a program for making a computer to function as the point selling server according to any of claims 1 to 6.
